# EUROPEAN PATENT SPECIFICATION

(11) **EP 3 459 677 B1**
(45) Date of publication and mention of the grant of the patent: **09.12.2020**
(21) Application number: 17799475.3
(22) Date of filing: 18.05.2017
(51) Int. Cl.: B23K 35/22, B23K 35/365, B23K 35/36, C22C 22/00, C22C 30/00, B23K 9/025, B23K 9/00, B23K 9/18, B23K 9/23, C22C 38/02, C22C 38/04, B23K 103/04, B23K 101/18, B23K 35/02, B23K 35/30

(54) **FLUX FOR SUBMERGED ARC WELDING**
FLUSSMITTEL FÜR UNTERPULVERLICHTBOGENSCHWEISSEN
FLUX POUR SOUDAGE À L'ARC SUBMERGÉ

(30) Priority: 19.05.2016 JP 2016100422
(43) Date of publication of application: 27.03.2019
(73) Proprietor: Kabushiki Kaisha Kobe Seiko Sho (Kobe Steel, Ltd.), Kobe-shi, Hyogo 651-8585 (JP)
(72) Inventor: TOYODA Takamasa, Kanagawa 251-8551 (JP); SUENAGA Kazuyuki, Kanagawa 251-8551 (JP)
(74) Representative: Müller-Boré & Partner Patentanwälte PartG mbB
(86) International application number: PCT/JP2017/018713
(87) International publication number: WO 2017/200051

(56) References cited:
- WO-A1-2013/024698
- JP-A- S52 156 145
- JP-A- 2003 230 983
- JP-B1- S5 131 782
- US-A- 3 796 609

## Description

### Technical Field

The present invention relates to a flux for submerged arc welding.

### Background Art

Fluxes for use in submerged arc welding are mainly classified into a fused flux and a sintered flux in terms of a form thereof. The fused flux is produced by melting various raw materials in an electric furnace or the like and crushing the materials. On the one hand, the sintered flux is produced by bonding various raw materials with a binder such as an alkali silicate, granulating them, and thereafter sintering the granulated materials.

The sintered flux is classified depending on the sintering temperature, and is generally classified into a low-temperature sintered flux produced by sintering at 400 to 600°C and a high-temperature sintered flux produced by sintering at 600 to 1,200°C.

The high-temperature sintered flux has excellent welding workability such as bead appearance and slag removability. On the other hand, since the high-temperature sintered flux is produced by sintering at a high temperature of 600°C or higher, even if alloy agents for improving strength and toughness of a weld metal is added, oxidation thereof occurs during sintering, and thus, alloy components cannot be supplied to the weld metal. Therefore, the desired effects cannot be obtained. In this description, the term "weld metal" refers to a metal which has been melted and solidified during welding when the welding is performed. The same also applies to the case where an alloy agent is added for the purpose of deoxidation, and the effect (porosity resistance) of avoiding pore defects such as pockmarks and blowholes generated in the weld metal is limited. Among the fluxes to which alloy agents cannot be added, since the fused flux is cheaper, the high-temperature sintered flux has been rarely used in Japan. In this description, "pockmark" refers to a circular or oval shallow concave portion appearing on a bead surface. The term "blowhole" refers to a spherical hollow cavity (pore) generated in the weld metal.

Under such circumstances, the invention described in Patent Document 1 has been proposed to provide a flux which keeps advantages of conventional high-temperature sintered fluxes, and has a low diffusible hydrogen content, good welding workability in alternating current (AC) welding using an AC as a power source, and high toughness.

Specifically, Patent Document 1 describes a high-temperature sintered flux for submerged arc welding, the high-temperature sintered flux containing 5 to 10% by mass of one or both of CaO and MgO. The high-temperature sintered flux for submerged arc welding contains a metal fluoride excluding an alkali metal fluoride in an amount of 3 to 30% by mass in terms of fluorine. In addition, the high-temperature sintered flux for submerged arc welding contains 5 to 50% by mass of SiO₂ as an acid oxide, or contains 25 to 60% by mass of SiO₂ and Al₂O₃, wherein the content of Al₂O₃ is 44% by mass or less. Further, in the high-temperature sintered flux for submerged arc welding, the content of Si as a metal powder in the flux is 0.5% by mass or less and a bulk density thereof is 0.8 to 1.2 g/cm³.

Patent Document 1 describes that since an alloy agent has been added from a flux in the past in the United States and Europe, Fe-Si which is relatively difficult to be modified (oxidized or nitrided) even by high-temperature sintering is added as a deoxidizer or alloy agent in a considerably large amount.

US 3796609 A and JP S52156145 A disclose flux for submerged arc welding.

### Prior Art Document

### Patent Document

Patent Document 1: JP-A-S62-68695

### Summary of Invention

### Technical Problems

However, in Patent Document 1, since the content of Si in the flux is as few as 0.5% or less by mass and Mn is not contained, improvement of the strength and toughness of the weld metal cannot be expected by the alloy addition. It is needless to say that the high-temperature sintered flux used in submerged arc welding is required to have porosity resistance.

The present invention has been achieved in view of these circumstances, and an object of the present invention is to provide a flux for submerged arc welding which provides excellent strength, toughness, and porosity resistance for a weld metal.

### Advantageous Effects of the Invention

The flux for submerged arc welding according to the present invention provides excellent strength, toughness, and porosity resistance for a weld metal.

### Brief Description of the Drawings

FIG. 1 is a diagram illustrating a groove shape of the steel plate in the case of No. T1 in Examples.
FIG. 2 is a diagram illustrating a groove shape of the steel plate in the case of No. T2 in Examples.
FIG. 3 is a diagram illustrating a groove shape of the steel plate in the case of No. M1 in Examples.
FIG. 4 is a diagram illustrating an arrangement of electrodes when welding is performed in Examples.

### Description of Embodiments

### (Flux for Submerged Arc Welding)

An embodiment of a flux for submerged arc welding in the present invention (hereinafter simply referred to as "flux" in some cases) is described below in detail. The flux for submerged arc welding according to the present embodiment is a high-temperature sintered flux. In this description, the term "high-temperature sintered" means that the flux is produced by sintering at 600 to 1,200°C. In addition, the term "submerged arc welding" refers to one kind of arc welding in which a powdery flux (fluxing agent) and a welding wire are used. The submerged arc welding is suitable for various kinds of relatively large structures such as ships, buildings, and bridges.

### (Fe-Si-Mn Alloy)

The flux according to the present embodiment contains an Fe-Si-Mn alloy.

Si and Mn can be supplied a weld metal by the Fe-Si-Mn alloy, and the Fe-Si-Mn alloy has an effect of improving strength and toughness of the weld metal. In addition, since the Fe-Si-Mn alloy also acts as a deoxidizer, excellent porosity resistance can be achieved.

An average particle diameter of a flux particle containing the Fe-Si-Mn alloy can be, for example, 2.5 mm or less. The average particle diameter of the flux can be measured, for example, in accordance with JIS Z 8815:1994 (Test sieving - General requirements) using a sieve defined in JIS Z 8801-1:2006 (Test Sieves - Part 1: Test sieves of metal wire cloth).

The Fe-Si-Mn alloy contains Mn: 40 to 75% by mass, Si: 15 to 45% by mass, and Fe: 0.4 to 30% by mass with the remainder being unavoidable impurities. Since Mn and Si are each contained in the specific given range, the strength and toughness of the weld metal are further improved. In addition, since the content of Fe is equal to or less than the specific content, the strength and toughness of the weld metal are further improved. Further, when the Fe-Si-Mn alloy is set in this manner, the effect as the deoxidizer can be more reliably obtained, so that the porosity resistance can be more excellent.

From the standpoint of further improving the strength and toughness of the weld metal while improving the porosity resistance, the content of Mn is more preferably 42% by mass or more, and even more preferably 44% by mass or more. From the same standpoint, the content of Mn is more preferably 72% by mass or less, and even more preferably 68% by mass or less.

From the same standpoint, the content of Si is more preferably 16% by mass or more, and even more preferably 17% by mass or more. In addition, the content of Si is more preferably 43% by mass or less, and even more preferably 41% by mass or less.

From the same standpoint, the content of Fe is more preferably 28% by mass or less, and even more preferably 25% by mass or less. In addition, the content of Fe is 0.4% by mass or more, and even more preferably 4% by mass or more.

Examples of the unavoidable impurities which can be contained in the Fe-Si-Mn alloy include C, P, S, and the like. Such unavoidable impurities do not impair the effects of the present invention as long as such impurities are contained in an amount which can be generally regarded as unavoidable impurities. Therefore, such impurities are allowed to be contained. In addition, various components other than Fe, Si, Mn and unavoidable impurities may be contained in the Fe-Si-Mn alloy within a range not impairing the expected effects of the present invention (that is, such an aspect is also included in the technical scope of the present invention). Examples of such components include Ti, B, Nb, V, and the like.

The content of the Fe-Si-Mn alloy is 0.5 to 15% by mass based on the total mass of the flux. When the content of the Fe-Si-Mn alloy contained in the flux is within this range, the strength and toughness of the weld metal are further improved. In addition, since the effect as the deoxidizer can be more reliably obtained, the porosity resistance can be more excellent.

From the standpoint of further improving the strength and toughness of the weld metal while improving the porosity resistance, the content of the Fe-Si-Mn alloy is more preferably 0.7% by mass or more, and even more preferably 0.9% by mass or more. From the same standpoint, the content of the Fe-Si-Mn alloy is more preferably 13% by mass or less, and even more preferably 11% by mass or less.

The Fe-Si-Mn alloy can be analyzed in accordance with JIS G 1301:2008 (Ferroalloys - General rules for chemical analysis), JIS G 1314-1:2011 (Method for chemical analysis of silicomanganese - Part 1: Determination of manganese content), JIS G 1314-2:2011 (Method for chemical analysis of silicomanganese - Part 2: Determination of silicon content) and JIS G 1351:2006 (Ferroalloys - Method of X-ray fluorescence spectrometric analysis). Presence of the Fe-Si-Mn in the flux can be confirmed by observation with a measuring device such as a scanning electron microscope (SEM) or an electron probe micro analyzer (EPMA). The approximate content of the Fe-Si-Mn can be grasped by a semi-quantitative analysis by Energy Dispersive X-ray Spectroscopy (EDS).

### (Other Components of Flux)

In the present embodiment, any chemical components indicated by "Flux Chemical Component Symbols" defined in standards relating to a flux for submerged arc welding such as those described in ISO 14174:2012 (Welding consumables - Fluxes for submerged arc welding and electroslag welding - Classification) or JIS Z 3352:2010 (Flux for submerged arc welding) can be contained as the other components of the flux. That is, when the flux according to the present embodiment contains the other components of the flux in an amount indicated by the standards, the effects of the present invention can be obtained even after high-temperature sintering at 600 to 1,200°C. Examples of the other components of the flux include one or two or more selected from Fe, Fe-Si, Fe-Mn, CaF₂, CaO, MgO, MnO, SiO₂, Al₂O₃, TiO₂, ZrO₂, BaO, NazO, K₂O, and Li₂O. In addition, examples of the other components of the flux also include a binder such as an alkali silicate, and the like.

The flux according to the present embodiment contains CaF₂: 10 to 30% by mass; CaO: 1 to 10% by mass; MgO: 15 to 30% by mass; MnO: 1 to 10% by mass; SiO₂: 10 to 30% by mass; Al₂O₃: 15 to 35% by mass; TiO₂: 0.5 to 3.0% by mass; and ZrO₂: 0.1 to 3% by mass.

Here, the content of CaF₂ is preferably 12% by mass or more. In addition, the content of CaF₂ is preferably 20% by mass or less.

The content of CaO is preferably 3% by mass or more. In addition, the content of CaO is preferably 8% by mass or less.

The content of MgO is preferably 18% by mass or more. In addition, the content of MgO is preferably 25% by mass or less.

The content of MnO is preferably 4% by mass or more. In addition, the content of MnO is preferably 8% by mass or less.

The content of SiO₂ is preferably 15% by mass or more. In addition, the content of SiO₂ is preferably 25% by mass or less.

The content of Al₂O₃ is preferably 20% by mass or more. In addition, the content of Al₂O₃ is preferably 30% by mass or less.

The content of TiO₂ is preferably 1.0% by mass or more. In addition, the content of TiO₂ is preferably 2% by mass or less.

The content of ZrO₂ is preferably 0.5% by mass or more. In addition, the content of ZrO₂ is preferably 2% by mass or less.

It is preferred that one or more of: TiO₂: 0.5 to 3.0% by mass; and ZrO₂: 0.1 to 3% by mass is contained.

Since these elements are contained, the welding workability is improved, for example.

### (Use of Flux)

It is preferred that the flux according the present embodiment is used in double-side one-layer welding or one-side one-pass welding. The flux according to the present embodiment can increase Si and Mn in the weld metal, and can improve the strength, toughness, and porosity resistance of the weld metal. Therefore, when the flux according to the present embodiment is used in the double-sided one-layer welding or the one-side one-pass welding, which produces more as-cast zones as compared with the case of multilayer welding which produces many reheated zones, the effect can be remarkably obtained in the case where Si and Mn are increased. The flux according to the present embodiment is also suitable for use in multilayer welding.

### (Method and Condition for Submerged Arc Welding)

A method for the submerged arc welding in the present embodiment is not limited to specific conditions as long as the method is submerged arc welding using the flux according to the present embodiment. As an embodiment of the welding method, the welding method includes, for example: a step of covering a welding portion of a member to be welded, specifically a portion where end faces of two steel plates contact with each other, with the flux according to the present embodiment; and a step of generating an arc in a state where a tip of a wire (electrode) is inserted in the flux to perform the welding, and these steps are performed in the above order.

As for the welding conditions of the submerged arc welding in which the flux according to the present embodiment is used, the number of electrodes is not limited, and a single electrode or multiple electrodes (two to six electrodes or the like) can be applied. The polarity is not limited, and either a direct current or an alternating current can be applied. A welding current in the range of 100 to 3,000 A, an arc voltage in the range of 10 to 100 V, and a welding speed in the range of 10 to 600 cpm can be applied. Although there is no limitation on layer arrangement, the flux is suitable for use in double-side one-layer welding or one-side one-pass welding, in which the proportion of as-cast zones is high, as described above.

### (Method for Producing Flux)

For example, the flux according to the present embodiment are obtained by mixing raw-material powders such as a metal Mn powder or a Fe-Si alloy powder so as to obtain the above-described composition, mixing the mixture together with a binder, thereafter granulating the resultant mixture, and sintering the granulated material. As the binder, polyvinyl alcohol or waterglass can be used, for example. Methods for the granulation are not particularly limited, and a rolling granulator, extrusion granulator, or the like can be used.

It is preferred that the granulated flux is subjected to particle size regulation treatments such as dust removal and disaggregation of coarse particles using a ball mill to have an average particle diameter of 2.5 mm or less. The sintering after the granulation can be performed using a rotary kiln, a stationary batch furnace, a belt type sintering furnace or the like. The sintering temperature at that time can be, for example, 600 to 1,200°C. The average particle diameter of the flux can be measured, for example, in accordance with JIS Z 8815:1994 (Test sieving - General requirements) using a sieve defined in JIS Z 8801-1:2006 (Test Sieves - Part 1: Test sieves of metal wire cloth).

The flux produced in this manner contains the Fe-Si-Mn alloy. That is, one particle constituting the flux contains the Fe-Si-Mn alloy, other alloy components, SiO₂, and the like.

### Examples

Next, the present invention is described in detail with reference to Examples which produce the effects of the present invention, and Comparative Examples which do not produce the effects.

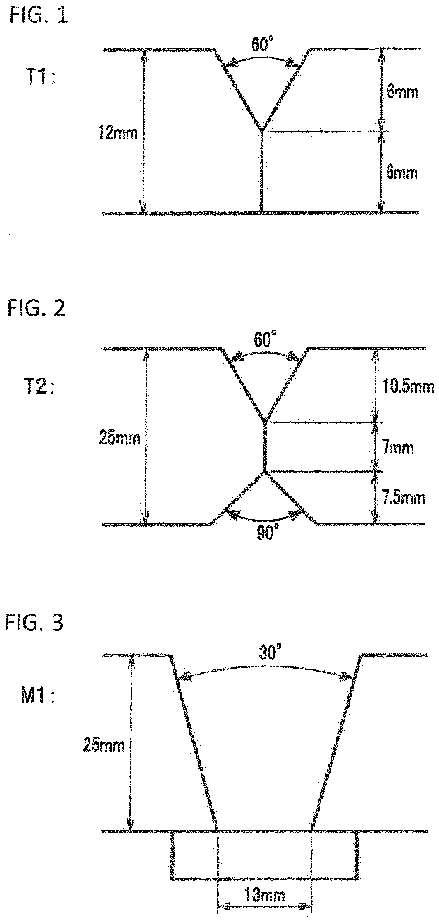

Two kinds of steel plates having a thickness (mm) and chemical components (% by mass) shown in Table 1 were prepared. The remainder of the chemical components shown in Table 1 is Fe and unavoidable impurities. The prepared two kinds of steel plates were welded under the conditions shown in No. T1, No. T2, and No. M1 in Table 2. A groove shape of the steel plates in the case of No. T1 is illustrated in FIG. 1. A groove shape of the steel plates in the case of No. T2 is illustrated in FIG. 2. A groove shape of the steel plates in the case of No. M1 is illustrated in FIG. 3. In Table 2, "Side: 1st" shown in No. T1 and No. T2 indicates the welding condition for a front surface of the steel plate (upper surface of the steel plate shown in FIG. 1 and FIG. 2), and "Side: 2nd" indicates the welding condition for a back surface of the steel plate (lower surface of the steel plate shown in FIG. 1 and FIG. 2). The case No. M1 in Table 2 shows the case where welding was performed only by a leading electrode from the front surface of the steel plate.

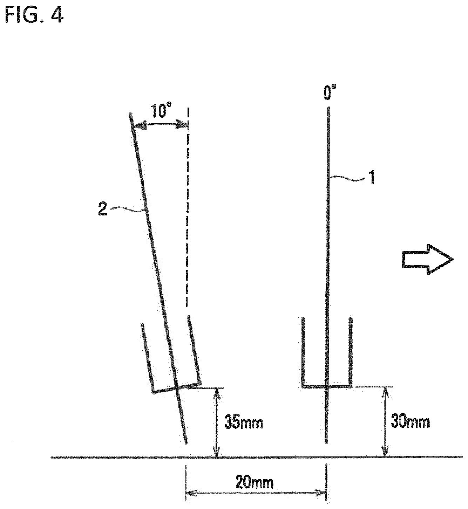

FIG. 4 illustrates an arrangement of electrodes when welding is performed. When the welding is performed, the electrodes, that is, a leading electrode 1 and a trailing electrode 2 were moved in the direction indicated by the arrow in the figure. The trailing electrode 2 was inclined by 10° such that a tip thereof faced the moving direction. The leading electrode 1 was taken as DCEP (direct current electrode positive), and the trailing electrode 2 was welded by an AC (alternating current).

The chemical components (% by mass) of the wire used in the welding are shown in No. W1 and No. W2 in Table 3. The remainder of the chemical components shown in Table 3 is Fe and unavoidable impurities.

The flux used in the welding contains a Fe-Si-Mn alloy, metal raw material components, and flux components. The chemical components (% by mass) of the Fe-Si-Mn alloy are shown in No. S1 to No. S5 in Table 4. The chemical components (% by mass) of the metal raw material components are shown in No. Fe-Si and No. Fe-Mn in Table 5. The chemical components (% by mass) of the flux components are shown in No. F1 to No. F9 in Table 6. The unavoidable impurities are not shown in Tables 4 to 6. The mark "-" in Table 5 and Table 6 indicates "not contained".

No. F1 to No. F5 in Table 6 were fluxes which contain the Fe-Si-Mn alloy and were produced by using No. S1 to No. S5 in Table 4 (Examples). No. F6 to No. F9 were fluxes which did not contain the Fe-Si-Mn alloy and were produced by using or without using No. Fe-Si and No. Fe-Mn in Table 5 (Comparative Examples).

As shown in No. 1 to No. 30 in Table 7, the submerged arc welding was performed under the conditions shown in Tables 1 to 6 to obtain welded plate materials (samples). Then, the mechanical properties and chemical components (% by mass) of the weld metal were measured using specimens prepared from the obtained welding test pieces. As for the mechanical properties, the tensile strength (TS) and Charpy absorbed energy (vE-20°C) were measured. The measurement results thereof are shown in Table 7. In addition, the pockmark and blowhole were evaluated to evaluate the porosity resistance using the obtained welding test pieces. The evaluation results thereof are shown in Table 8. The measurement and evaluation were performed as follows. Further, the chemical components (% by mass) of the weld metal of the obtained welding test pieces were measured by an X-ray fluorescence analyzer. The results thereof are shown in Table 7.

### (Tensile Strength)

The tensile strength was measured by the test method defined in JIS Z 2241:2011 (Metallic materials - Tensile testing - Method of test at room temperature). The tensile strength of 490 N/mm² or more was evaluated as acceptable and the tensile strength of less than 490 N/mm² was evaluated as unacceptable.

### (Charpy Absorbed Energy)

The Charpy absorbed energy was measured by the test method defined in JIS Z 2242:2005 (Method for Charpy pendulum impact test of metallic materials). The test temperature was set to be -20°C. The Charpy absorbed energy of 47 J or more was evaluated as acceptable and the Charpy absorbed energy of less than 47J was evaluated as unacceptable.

### (Pockmark)

The evaluation of the pockmark was performed in accordance with JIS Z 3090:2005 (Visual testing method of fusion-welded joints). No pockmark occurred (0%) was evaluated as "⊚"; an occurrence ratio of the pockmark of more than 0% and 0.5% or less per unit welding length (1 m) was evaluated as "○"; an occurrence ratio of the pockmark of more than 0.5% and 1.0% or less per unit welding length (1 m) was evaluated as "Δ "; and an occurrence ratio of the pockmark of more than 1.0% per unit welding length (1 m) was evaluated as "×". The evaluation of the pockmark of "⊚" or "o" was deemed to be acceptable, while the evaluation of "Δ" or "×" was deemed to be unacceptable.

### (Blowhole)

The evaluation of the blowhole was performed in accordance with JIS Z 3104:1995 (Methods of radiographic examination for welded joints in steel). No blowhole occurred (0%) was evaluated as "⊚" ; an occurrence ratio of the blowholes of more than 0% and 0.5% or less per unit welding length (1 m) was evaluated as "o"; an occurrence ratio of the blowholes of more than 0.5% and 1.0% or less per unit welding length (1 m) was evaluated as "Δ"; and an occurrence ratio of the blowholes of more than 1.0% per unit welding length (1 m) was evaluated as "×". The evaluation of the blowhole was "⊚" or "o" was deemed to be acceptable, while the evaluation of "Δ" or "×" was deemed to be unacceptable.

**Table 1**

| Thickness (mm) | Chemical components (% by mass) | | | | |
|---|---|---|---|---|---|
| | C | Si | Mn | P | S |
| 12 | 0.12 | 0.21 | 0.97 | 0.015 | 0.003 |
| 25 | 0.14 | 0.22 | 1.10 | 0.013 | 0.002 |

**Table 2**

| | No. | Thickness (mm) | Side | Leading electrode | | Trailing electrode | | Welding speed (cm/min) |
|---|---|---|---|---|---|---|---|---|
| | | | | Current (A) | Voltage (V) | Current (A) | Voltage (V) | |
| Double-side one-layer | T1 | 12 | 1st | 800 | 36 | 800 | 40 | 75 |
| | | | 2nd | 900 | 34 | 850 | 42 | 85 |
| | T2 | 25 | 1st | 950 | 36 | 900 | 40 | 57 |
| | | | 2nd | 1050 | 34 | 1000 | 42 | 62 |
| Multilayer | M1 | 25 | - | 550 | 30 | - | - | 40 |

**Table 3**

| No. | Chemical components (% by mass) | | | | |
|---|---|---|---|---|---|
| | C | Si | Mn | P | S |
| W1 | 0.09 | 0.20 | 1.04 | 0.013 | 0.008 |
| W2 | 0.13 | 0.02 | 1.93 | 0.011 | 0.005 |

**Table 4**

| No. | Chemical components (% by mass) | | |
|---|---|---|---|
| | Mn | Si | Fe |
| S1 | 40 | 45 | 15 |
| S2 | 75 | 15 | 10 |
| S3 | 50 | 20 | 30 |
| S4 | 58 | 37 | 5 |
| S5 | 49 | 26 | 25 |

**Table 5**

| No. | Chemical components (% by mass) | | |
|---|---|---|---|
| | Mn | Si | Fe |
| Fe-Si | - | 75 | 25 |
| Fe-Mn | 70 | - | 30 |

**Table 6**

| Classification | No. | Chemical components (% by mass) | | | | | | | | | | | | Sintering temperature (°C) |
|---|---|---|---|---|---|---|---|---|---|---|---|---|---|---|
| | | Fe-Si-Mn | | Fe-Si | Fe-Mn | CaF₂ | CaO | MgO | MnO | SiO₂ | Al₂O₃ | TiO₂ | ZrO₂ | |
| | | Mark | Addition amount | | | | | | | | | | | |
| Examples | F1 | S1 | 15 | 0 | 0 | 11 | 0 | 18 | 4 | 16 | 31 | 1 | 0 | 850 |
| | F2 | S2 | 8 | 0 | 0 | 12 | 4 | 18 | 7 | 20 | 27 | 1 | 2 | 800 |
| | F3 | S3 | 1.5 | 0 | 0 | 14 | 6 | 18 | 9 | 25 | 22 | 1 | 0 | 750 |
| | F4 | S4 | 0.5 | 3 | 0 | 30 | 1 | 26 | 1 | 15 | 20 | 2 | 0 | 850 |
| | F5 | S5 | 6 | 0 | 0 | 29 | 0 | 25 | 0 | 14 | 19 | 1 | 0 | 850 |
| Comparative Examples | F6 | - | - | 5 | 0 | 13 | 0 | 20 | 5 | 18 | 34 | 2 | 0 | 850 |
| | F7 | - | - | 0 | 10 | 11 | 3 | 17 | 6 | 19 | 26 | 0 | 1 | 800 |
| | F8 | - | - | 0 | 0 | 14 | 6 | 18 | 9 | 26 | 23 | 1 | 0 | 750 |
| | F9 | - | - | 3 | 2 | 30 | 1 | 26 | 1 | 15 | 20 | 2 | 0 | 850 |

**Table 7**

| Classification | No. | Welding conditions | Wire | Flux | Mechanical properties | | Chemical components of weld metal (% by mass) | | | | |
|---|---|---|---|---|---|---|---|---|---|---|---|
| | | | | | TS (N/mm²) | vE-20°C (J) | | | | | |
| | | | | | | | C | Si | Mn | P | S |
| | 1 | T1 | W1 | F1 | 615 | 106 | 0.10 | 0.47 | 1.53 | 0.018 | 0.005 |
| | 2 | T1 | W1 | F2 | 577 | 100 | 0.09 | 0.44 | 1.44 | 0.017 | 0.005 |
| | 3 | T1 | W1 | F3 | 543 | 94 | 0.08 | 0.41 | 1.35 | 0.016 | 0.005 |
| | 4 | T2 | W1 | F1 | 692 | 97 | 0.11 | 0.53 | 1.73 | 0.020 | 0.006 |
| | 5 | T2 | W1 | F2 | 650 | 91 | 0.10 | 0.50 | 1.62 | 0.019 | 0.006 |
| | 6 | T2 | W1 | F3 | 611 | 86 | 0.10 | 0.47 | 1.52 | 0.018 | 0.005 |
| | 7 | M1 | W1 | F1 | 642 | 128 | 0.05 | 0.64 | 1.94 | 0.020 | 0.007 |
| Examples | 8 | M1 | W1 | F2 | 628 | 210 | 0.05 | 0.70 | 1.61 | 0.014 | 0.004 |
| | 9 | M1 | W1 | F3 | 591 | 198 | 0.05 | 0.66 | 1.51 | 0.013 | 0.004 |
| | 10 | M1 | W1 | F4 | 612 | 292 | 0.05 | 0.75 | 1.27 | 0.009 | 0.001 |
| | 11 | M1 | W1 | F5 | 618 | 207 | 0.05 | 0.69 | 1.58 | 0.014 | 0.004 |
| | 12 | M1 | W2 | F1 | 671 | 163 | 0.05 | 0.42 | 2.19 | 0.014 | 0.003 |
| | 13 | M1 | W2 | F2 | 679 | 181 | 0.06 | 0.52 | 2.08 | 0.012 | 0.003 |
| | 14 | M1 | W2 | F3 | 638 | 170 | 0.06 | 0.49 | 1.95 | 0.012 | 0.002 |
| | 15 | M1 | W2 | F4 | 684 | 198 | 0.06 | 0.61 | 1.96 | 0.010 | 0.002 |
| | 16 | M1 | W2 | F5 | 668 | 178 | 0.06 | 0.51 | 2.05 | 0.012 | 0.002 |
| Comparative Examples | 17 | T1 | W1 | F6 | 538 | 26 | 0.11 | 0.30 | 1.27 | 0.019 | 0.005 |
| | 18 | T1 | W1 | F7 | 505 | 24 | 0.10 | 0.28 | 1.19 | 0.018 | 0.005 |
| | 19 | T1 | W1 | F8 | 475 | 23 | 0.09 | 0.26 | 1.12 | 0.017 | 0.005 |
| | 20 | T2 | W1 | F6 | 605 | 23 | 0.12 | 0.34 | 1.43 | 0.022 | 0.006 |
| | 21 | T2 | W1 | F7 | 569 | 22 | 0.11 | 0.32 | 1.34 | 0.020 | 0.006 |
| | 22 | T2 | W1 | F8 | 534 | 21 | 0.11 | 0.30 | 1.26 | 0.019 | 0.005 |
| | 23 | M1 | W1 | F6 | 562 | 101 | 0.05 | 0.41 | 1.60 | 0.021 | 0.007 |
| | 24 | M1 | W1 | F7 | 550 | 166 | 0.06 | 0.45 | 1.33 | 0.015 | 0.004 |
| | 25 | M1 | W1 | F8 | 517 | 156 | 0.05 | 0.42 | 1.25 | 0.014 | 0.004 |
| | 26 | M1 | W1 | F9 | 535 | 230 | 0.06 | 0.48 | 1.05 | 0.009 | 0.001 |
| | 27 | M1 | W2 | F6 | 587 | 129 | 0.06 | 0.27 | 1.81 | 0.015 | 0.003 |
| | 28 | M1 | W2 | F7 | 594 | 143 | 0.07 | 0.33 | 1.72 | 0.013 | 0.003 |
| | 29 | M1 | W2 | F8 | 558 | 134 | 0.06 | 0.31 | 1.62 | 0.012 | 0.002 |
| | 30 | M1 | W2 | F9 | 598 | 156 | 0.07 | 0.39 | 1.62 | 0.011 | 0.002 |

**Table 8**

| Classification | No. | Welding conditions | Wire | Flux | Presence or absence of pockmark | Presence or absence of blowhole |
|---|---|---|---|---|---|---|
| | 1 | T1 | W1 | F1 | ⊚ | ⊚ |
| | 2 | T1 | W1 | F2 | ⊚ | ⊚ |
| | 3 | T1 | W1 | F3 | ⊚ | ⊚ |
| | 4 | T2 | W1 | F1 | ⊚ | ⊚ |
| | 5 | T2 | W1 | F2 | ⊚ | ⊚ |
| | 6 | T2 | W1 | F3 | ○ | ⊚ |
| | 7 | M1 | W1 | F1 | ⊚ | ⊚ |
| Examples | 8 | M1 | W1 | F2 | ⊚ | ⊚ |
| | 9 | M1 | W1 | F3 | ○ | ⊚ |
| | 10 | M1 | W1 | F4 | ○ | ⊚ |
| | 11 | M1 | W1 | F5 | ⊚ | ⊚ |
| | 12 | M1 | W2 | F1 | ⊚ | ⊚ |
| | 13 | M1 | W2 | F2 | ⊚ | ⊚ |
| | 14 | M1 | W2 | F3 | ○ | ⊚ |
| | 15 | M1 | W2 | F4 | ○ | ⊚ |
| | 16 | M1 | W2 | F5 | ⊚ | ⊚ |
| Comparative Examples | 17 | T1 | W1 | F6 | Δ | Δ |
| | 18 | T1 | W1 | F7 | Δ | × |
| | 19 | T1 | W1 | F8 | × | Δ |
| | 20 | T2 | W1 | F6 | × | × |
| | 21 | T2 | W1 | F7 | Δ | × |
| | 22 | T2 | W1 | F8 | Δ | × |
| | 23 | M1 | W1 | F6 | × | Δ |
| | 24 | M1 | W1 | F7 | Δ | × |
| | 25 | M1 | W1 | F8 | Δ | × |
| | 26 | M1 | W1 | F9 | Δ | × |
| | 27 | M1 | W2 | F6 | × | Δ |
| | 28 | M1 | W2 | F7 | Δ | × |
| | 29 | M1 | W2 | F8 | Δ | × |
| | 30 | M1 | W2 | F9 | × | Δ |

As shown in Table 7, since the flux containing the Fe-Si-Mn alloy (see No. F1 to No. F5 in Table 6) was used in the samples according to No. 1 to No. 16, the tensile strength and the Charpy absorbed energy were evaluated as acceptable and the mechanical properties were excellent. As shown in Table 8, since the flux containing the Fe-Si-Mn alloy was used in the samples according to No. 1 to No. 16, the pockmark and blowhole were evaluated as acceptable and the porosity resistance was excellent.

In contrast, as shown in Tables 7 and 8, since the flux containing no Fe-Si-Mn alloy (see No. F6 to No. F9 in Table 6) was used in the samples according to No. 17 to No. 30, at least one of the tensile strength, Charpy absorbed energy, pockmark, and blowholes was poor.

Specifically, as shown in Table 7, the samples according to No. 17 to No. 22 had a low Charpy absorbed energy and poor toughness. Among these, the sample according to No. 19 had poor tensile strength.

In addition, as shown in Table 8, in all the samples according to No. 17 to No. 30, the pockmark and blowhole were evaluated as unacceptable, and the porosity resistance was poor.

Although the present invention has been described in detail with reference to specific embodiments, it will be apparent to those skilled in the art that various changes and modifications can be made within the scope of the appended claims.

The present application is based on Japanese Patent Application No. 2016-100422 filed on May 19, 2016.

### Industrial Applicability

By using the flux for submerged arc welding of the present invention, a weld metal which has excellent strength, toughness, and porosity resistance can be obtained, and the flux is particularly useful for double-side one-layer welding or one-side one-pass welding.

## Claims

1. A flux for submerged arc welding, comprising an Fe-Si-Mn alloy in an amount of 0.5 to 15% by mass, and further comprising: CaF₂: 10 to 30% by mass; CaO: 1 to 10% by mass; MgO: 15 to 30% by mass; MnO: 1 to 10% by mass; SiO₂: 10 to 30% by mass; Al₂O₃: 15 to 35% by mass; TiO₂: 0.5 to 3.0% by mass; and ZrO₂: 0.1 to 3% by mass,
wherein the Fe-Si-Mn alloy consists of Mn: 40 to 75% by mass, Si: 15 to 45% by mass, and Fe: 0.4% by mass or more and 30% by mass or less with the remainder being unavoidable impurities.

2. Use of the flux for submerged arc welding according to claim 1 in double-side one-layer welding or one-side one-pass welding.

## Patentansprüche

1. Flußmittel zum Unterpulverlichtbogenschweißen, umfassend eine Fe-Si-Mn-Legierung in einer Menge von 0,5 bis 15 Masse-%, und weiter umfassend: CaF₂: 10 bis 30 Masse-%; CaO: 1 bis 10 Masse-%; MgO: 15 bis 30 Masse-%; MnO: 1 bis 10 Masse-%; SiO₂: 10 bis 30 Masse-%; Al₂O₃: 15 bis 35 Masse-%; TiO₂: 0,5 bis 3,0 Masse-%; und ZrO₂: 0,1 bis 3 Masse-%,
wobei die Fe-Si-Mn-Legierung besteht aus: Mn: 40 bis 75 Masse-%, Si: 15 bis 45 Masse-% und Fe: 0,4 Masse-% oder mehr und 30 Masse-% oder weniger, wobei der Rest unvermeidbare Verunreinigungen sind.

2. Verwendung des Flußmittels zum Unterpulverlichtbogenschweißen gemäß Anspruch 1 im doppelseitigen Einschichtschweißen oder einseitigem Einpassschweißen.

## Revendications

1. Flux pour soudage à l'arc submergé, comprenant un alliage Fe-Si-Mn en une quantité allant de 0,5 à 15% en masse, et comprenant en outre, CaF₂ : 10 à 30% en masse ; CaO : 1 à 10% en masse ; MgO : 15 à 30% en masse ; MnO : 1 à 10% en masse ; SiC>₂ : 10 à 30% en masse ; Al₂O₃ : 15 à 35% en masse ; TiO₂ : 0,5 à 3,0% en masse, et ZrO₂ : 0,1 à 3% en masse,
dans lequel l'alliage Fe-Si-Mn consiste en Mn : 40 à 75% en masse, Si : 15 à 45% en masse et Fe : 0,4% en masse ou plus et 30% en masse ou moins, le reste étant les impuretés inévitables.

2. Utilisation du flux pour soudage à l'arc submergé selon la revendication 1, pour le soudage à double accès à une couche ou le soudage à simple accès et un passage.
